(19) Europäisches Patentamt / European Patent Office / Office européen des brevets

(11) **EP 3 605 464 A1**

(12) **EUROPEAN PATENT APPLICATION**
published in accordance with Art. 153(4) EPC

(43) Date of publication:
**05.02.2020 Bulletin 2020/06**

(21) Application number: **18777241.3**

(22) Date of filing: **09.01.2018**

(51) Int Cl.:
$G06T\ 7/143^{(2017.01)}$ $\qquad$ $G06T\ 7/11^{(2017.01)}$

(86) International application number:
**PCT/CN2018/071937**

(87) International publication number:
**WO 2018/176985 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.03.2017 CN 201710195047**

(71) Applicant: **Shenzhen Brainnow Medical Technology Co., Ltd.
Shenzhen, Guangdong 518000 (CN)**

(72) Inventor: **LUO, Yishan
Shenzhen, Guangdong 518000 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **QUANTITATIVE CALCULATION METHOD FOR LEVEL OF BRAIN ATROPHY BASED ON AUTOMATIC SEGMENTATION**

(57) A method of the automatic quantification of regional brain atrophy includes at least the steps of brain template database construction, non-linear registration and calculation of brain atrophy degree. The method is convenient and efficiency with a high degree of quantification and accurate, this disclosure offers a highly feasible strategy in quantifying brain atrophy degree, which serves as a reference to assist the evaluation of other situations.

FIG. 1

**Description**

FIELD OF THE DISCLOSURE

The present disclosure involves the computation technology of brain atrophy degree, in particular for the automatic quantification of regional brain atrophy.

BACKGROUND OF THE RELATED ART

Brain atrophy is a phenomenon caused by manifestation of organic disease in brain tissue. The main pathological manifestations of brain atrophy are volume loss in brain tissue and structures, such as reduced brain parenchyma, reduced brain weight, reduced number of nerve cells, flattened gyri, widened or deepened sulci, and enlarged ventricles, brain cisterns and subarachnoid space. The clinical symptoms resulted by brain atrophy can be divided into two categories, namely brain function decline and intellectual decline as in dementia, which are associated with the location and degree of brain atrophy. Specifically, one important type of brain atrophy, of which the major pathological change is characterized as atrophy in cerebral cortex, causes clinical symptoms such as motor dysfunction, memory loss and slow response.

With the development of medical imaging and computer-based image processing techniques, neuroimaging and the related analysis serve as an accurate and highly reproducible quantitative assessment method, which has played very important roles. It is of great importance and significance to assist the assessment through the computer aided systems of medical neuroimaging.

The naming of brain atrophy is derived from the findings of volume loss of brain tissue and enlargement of the ventricles as identified on Computer Tomography (CT) or Magnetic Resonance Imaging (MRI). Therefore, incidence of brain atrophy is a common neuroimaging manifestation of many diseases. Neuroimaging examinations such as CT and MRI revealed a decrease in brain tissue volume and ventricular enlargement. Brain cerebral atrophy is characterized as enlarged gaps between cerebral cortex and skull plate, widening and deepening of brain sulci, flattening of gyri, enlarged lateral ventricle and third ventricle, and reduced density of periventricular walls. Brain cerebellar atrophy is characterized as widening and deepening of cerebellar sulci, reduced cerebellar volume, signs of branching-out-alike cerebellum contours, increase in surrounding gaps of the cerebellum, and expansion of the fourth ventricle. Pons atrophy can be presented as narrowing of the brainstem, increased gaps around the brainstem, flattening of pons, and reduction of pons volume. As different kinds of brain diseases induce different locations and degrees of brain atrophy, it is thus important to accurately determine the degree and region of brain atrophy in clinical neuroimaging diagnosis.

Currently, the assessment of brain atrophy degree is mainly based on subjective methods, lacking simple and objective quantitative indicators. Therefore, it is necessary to develop a method to quantify brain atrophy in order to accurately and objectively assess the degree of brain atrophy.

TECHNICAL PROBLEM

The objective of the present disclosure is to provide an automatic quantification method for regional brain atrophy to solve the problem that the degree of brain atrophy is mainly subjective judgment based on experienced and cannot be quantified objectively.

TECHNICAL SOLUTIONS

In order to achieve the above objective, the present disclosure adopts the following technical solutions:
The automatic quantification method for regional brain atrophy degree comprises at least the steps of:

Step S01. building a brain template database using a pool of Tlw brain MR images with apparent brain structural differences, performing brain lobe partitioning on the MR image to obtain 12 brain lobar partition, and performing brain tissue segmentation on the Tlw brain MR images to obtain brain tissue probability maps of white matter, gray matter and cerebrospinal fluid, and performing manual correction on the brain lobar partitions of the brain template database obtained by automatic partitioning;

Step S02. mapping the template images from Step S01 to the Tlw MR image of the subject to be segmented with non-linear registration to obtain the spatial transformations between the template and the subject to be segmented, and mapping the brain lobar partitions and the brain tissue probability maps of the template images to the space of the subject image to be segmented by using the spatial transformations;

Step S03. performing label fusion using simultaneous truth and performance level estimation (STAPLE) algorithm to obtain the brain lobar partitions of the subject to be segmented, and using Bayesian network-based segmentation method to obtain a brain tissue segmentation map based on the prior knowledge of the brain tissue probability map; and

Step S04. calculating the degree of brain atrophy of the subject to be segmented according to its brain lobar partition and brain tissue segmentation map obtained from Step S03.

BENIFICAL EFFECT

In comparison with existing technology, the method of automatic quantification for regional brain atrophy degree in this disclosure is convenient, with high degrees of quantification and with high accuracy in determination; this method provides a feasible strategy to quantify the brain atrophy degree.

BRIEF DESCRIPTION OF THE DRAWINGS

In order to illustrate the technical solutions applied in the embodiments of the present disclosure more clearly, a brief introduction of the attached drawings is provided below. Obviously, the drawings in the following description are only some of the embodiments of the present disclosure. For those skilled in the art, other drawings can be generated based on these drawings without any creative effort.

FIG. 1 is a flowchart of the image segmentation algorithm based on multiple templates in accordance with an embodiment of the present disclosure; and

FIG. 2 is a diagram of brain lobar segmentations in accordance with an embodiment of the present disclosure;

In the drawings, 1 - brain template, 2- brain structural MR image to be segmented, 3- brain lobar partition map, 4- brain tissue probability map, 5- brain tissue segmentation map; a- brain template registration procedure, b- registration procedure to obtain brain lobar partitions, c-registration procedure to obtain brain tissue probability map, d- brain tissue segmentation based on Bayesian network; A- frontal lobe, B- parietal lobe, C- occipital lobe, D- temporal lobe, E-cingulate lobe, F- insular lobe.

DETAILED DESCRIPTION

To make the objectives, technical solutions and advantages of the present disclosure more clear and understandable, the present disclosure will be described in detail with reference to the attached drawings and embodiments. It should be noted that the specific embodiments described here is only intended to illustrate the present disclosure, and is not intended to limit the scope of the present disclosure.

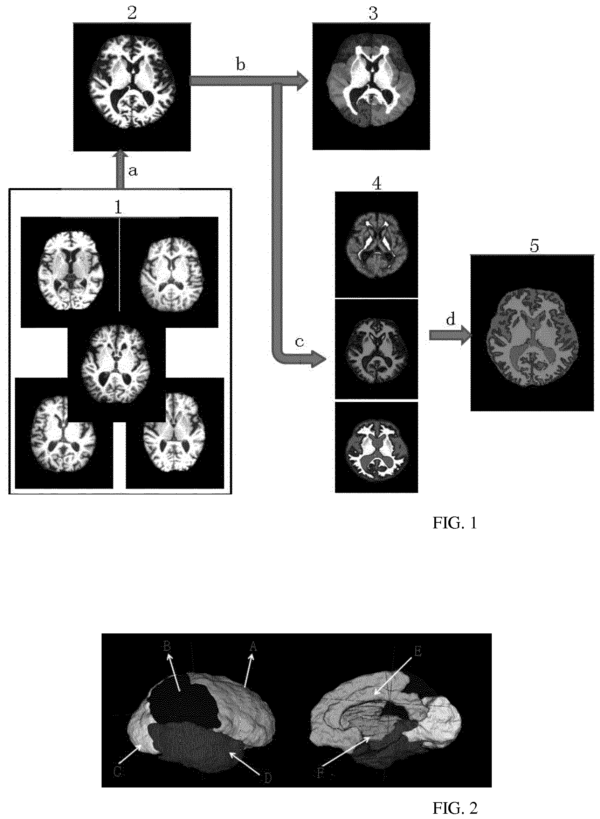

As shown in FIG. 1, an embodiment of the present disclosure provides an automatic quantification method for regional brain atrophy, comprising at least the steps of:

Step S01: Building a brain template database using a pool of Tlw brain MR images with apparent brain structural differences, performing brain lobe partitioning on the image to obtain 12 brain lobar partition, and performing brain tissue segmentation on the Tlw brain MR images to obtain brain tissue probability maps of white matter, gray matter and cerebrospinal fluid; and performing manual correction on the brain lobar partitions of the brain template database obtained by automatic partitioning.

Step S02. The template images from Step S01 are mapped to the Tlw MR image of the subject to be segmented with non-linear registration to obtain the spatial transformations between the template and the subject to be segmented, and mapping the brain lobar partitions and the brain tissue probability maps of the template image to the space of the subject image to be segmented by using the spatial transformations.

Step S03. Label fusion using simultaneous truth and performance level estimation (STAPLE) algorithm is performed to obtain the brain lobar partition of the subject to be segmented and using Bayesian network-based segmentation method to obtain a brain tissue segmentation map based on the prior knowledge of the brain tissue probability map.

Step S04. The degree of brain atrophy of the subject to be segmented is calculated according to its brain lobar partition and the brain tissue segmentation map obtained from Step S03.

In the embodiment, the main purpose of Step S01 is to create a template database. The brains with significant structural differences involved here refer to those with varying degrees of brain atrophy, which ranges from brains with no atrophy to brains with severe atrophy. It is best to have a large amount of brains to construct the templates, so that the templates can cover a broad range of situations for the brain structures.

Preferably, the number of brain templates in the template database is not less than 5.

Preferably, the brain templates in the template database come from the brains of adults aged from 50 years old to 90 years old.

Further preferably, the proportion of the number of images for healthy individuals to the number of images for individuals with brain atrophy in the brain templates is ranged between 1: 4 to 4: 1.

Further, in the brain template database, the proportion of the number of images for healthy individuals to the number of images for individuals with brain atrophy is 1: 1.

Preferably, as shown in FIG. 2, the partition of brain lobes in Step S01 can be performed manually on the Tlw MR images of the brain templates. Brain lobes are divided according to anatomy, mainly based on the standard as presented in Terminologia Anatomica (1998), into frontal lobe A, parietal lobe B, occipital lobe C, temporal lobe D, cingulate lobe E, and insular lobe F. In specifics, frontal lobe A is located in the frontal portion of cerebral hemispheres, positioned anteriorly to parietal lobe B and superior to temporal lobe D, parietal lobe B is positioned superior to occipital lobe C and posterior to frontal lobe A and central sulci, temporal lobe D is positioned inferior to the lateral sulci of the two cerebral hemispheres, cingulate lobe E is an arc-shaped cortical area on the inner surface of the cerebral hemisphere, which contains parts of frontal lobe A, parietal lobe B and temporal lobe D, and insular lobe F is a portion of the cerebral cortex folded deep within the lateral sulcus (the fissure separating the temporal lobe D from the parietal lobe B and frontal lobe A).

The frontal lobe A, parietal lobe B, occipital lobe C, temporal lobe D, cingulate lobe E and insular lobe F can be specifically divided into left frontal lobe, right frontal lobe, left occipital lobe, right occipital lobe, left parietal lobe, right parietal lobe, left temporal lobe, right temporal lobe, left cingulate lobe right cingulate lobe, left insular lobe and right insular lobe.

In Step S02, the non-linear registration can be implemented with, for example, the non-linear symmetric diffeomorphic registration algorithm. The non-linear registration algorithm is not limited to the non-linear symmetric diffeomorphic registration algorithm, and other similar non-linear registration algorithms can also be applied. By using spatial transformations, the brain lobar partitions and the brain tissue probability maps can be mapped to the space of the subject image to be segmented.

In Step S02, obtaining the spatial transformation requires repeated iterative optimization, aiming to optimize the correlation between the local pixels of the subject image and the brain template image. With this spatial transformation, the brain lobar partition previously defined in the template space is mapped to the space of the subject image and the segmentation result of the target image is obtained.

In Step S03, with the segmented maps obtained from non-linear registration, by using label fusion method, the segmentation results from each template are merged into an optimal result of brain lobar segmentation for the subject image. Here, the label fusion method can be implemented with a method named Simultaneous Truth and Performance Level Estimation (STAPLE). The STAPLE algorithm uses Expectation Maximization (EM) algorithm to integrate multiple segmentation results into an optimal segmentation result of the target image. With this multiple-template-based segmentation method, the bias caused by single template may be avoided and thus more accurate results can be achieved. The label fusion method is not limited to the STAPLE algorithm, and other fusion methods, such as a majority consent rule, a reliability-based label fusion method, and a weighted label fusion method may be used.

In the above Step S03, the STAPLE algorithm can be specifically referred to Warfield, S. K., K.H.Zou, et al (2004). Simultaneous truth and performance level estimation (STAPLE): an algorithm for the validation of image segmentation. IEEE Trans Med Imaging, 23(7): 903-921.

The brain tissue probability map obtained from registration is used as prior knowledge (using the segmentation method based on Gaussian mixture model, the Tlw MR image is segmented into different tissue types so as to obtain the prior probability of each voxel that belongs to gray matter, white matter, or cerebrospinal fluid), and the brain tissue segmentation method based on Bayesian network is used to perform brain tissue segmentation to obtain the segmentation maps of white matter, gray matter and cerebrospinal fluid. Using the segmentation algorithm based on Bayesian network, the segmentation problem is treated as an optimization problem. With the probability maps of each brain tissue as prior knowledge, the posterior probability of the model is calculated by the model parameters estimated through the Expectation Maximization (EM) algorithm, and then the optimal segmentation result can be obtained.

In other words, in multiple templates, the registered template that is most similar to the subject image is selected, and the tissue probability map of this template is mapped to the space of the subject image as its prior tissue probability map. The prior tissue probability map serves as prior knowledge for tissue segmentation and then the optimization algorithm of brain tissue segmentation is performed. In order to obtain more accurate segmentation results, the Bayesian model algorithm for segmentation and the EM algorithm for optimization are applied to maximize the posterior probability of each pixel. With the registered tissue probability map as prior knowledge, an iterative conditional mode optimization algorithm is used to optimize the target function, which aims to realize a global maximization of the posterior probability of each pixel, resulting in the optimal brain tissue segmentation result.

Or, in order to obtain more accurate segmentation results, the registered brain tissue probability map is used as initial prior knowledge, the Bayesian model algorithm for segmentation is adopted. EM algorithm is used to optimize the model parameters and the iterative conditional mode optimization algorithm is used to optimize the target function, resulting in a global maximization of the posterior probability of each pixel to generate the optimal brain tissue segmentation result.

In Step S04, the calculation method of the degree of brain atrophy is implemented according to the i-th result of the previously obtained lobar partition and tissue segmentation, and the specific calculation formula is as follows:

$$A_i = V_{CSF\_i} / (V_{WM\_i} + V_{GM\_i})$$

In the formula $A_i$ denotes the value of atrophy degree for the *i*-th brain lobe. $V_{CSF\_i}$ denotes the volume of cerebral spinal fluid in the *i*-th brain lobe, $V_{WM\_i}$ denotes the volume of white matter in the *i*-th brain lobe, and $V_{GM\_i}$ denotes the volume of gray matter in the *i*-th brain lobe.

The value $A_i$ of degree of brain atrophy obtained from the above formula is a relative value greater than 0. This value can directly reflect the atrophy degree of different brain regions, where the greater the value is, the higher the degree of brain atrophy in this region will be.

The method of automatic quantification of regional brain atrophy described in the above embodiments of the present disclosure is convenient, with high degrees of quantification and with high accuracy in determination; this method provides a feasible strategy to quantify the brain atrophy degree.

In order to better illustrate the automatic quantification approach of regional brain atrophy degree in this disclosure, we will provide an example of a preferred embodiment.

Example

A total of 200 Tlw brain MR images are collected for an experiment, where 100 images come from the normal elderly aged 65 ± 9 years, and 100 images from elderly patients with dementia aged 65 ± 9 years. Here, the aim of the experiment is to compare the atrophy degree of each brain lobe between the normal elderlies and demented elderlies. Specific steps are as follows:

Step S01. Non-linear registration between the Tlw brain MR images of the normal elderlies and demented elderlies and the brain templates is performed, which derives the spatial transformations between the brain templates and individuals' brain MRIs (from both normal elderlies and demented elderlies);

Step S02. The brain lobar partition and the brain tissue probability maps of the brain templates are mapped to the space of the subject to be segmented;

Step S03. By using the label fusion method STAPLE, the lobar partition for each individual's brain image is obtained; in template database, the registered brain template that is most similar to the target image is selected, and the brain tissue probability map of this template is mapped to the space of the target image as the tissue probability map of the target image. Subsequently, the EM algorithm is further applied to obtain the final brain tissue segmentation map;

Step S04. According to the obtained lobar segmentations and brain tissue probability map, the brain atrophy quantification formula below is applied to quantify the atrophy degree of each segmented brain region for the normal elderlies and demented elderlies.

$$A_i = V_{CSF\_i} / (V_{WM\_i} + V_{GM\_i})$$

The quantification results are shown in Table 1.

Table 1. Comparison of the brain atrophy degree of various brain regions in the normal elderly and the patients with dementia.

| Table 1. Comparison of brain regional atrophy degree between normal and demented elderlies | | | | | | |
|---|---|---|---|---|---|---|
| Left hemisphere | Cingulate lobe | Frontal lobe | Insula | Occipital lobe | Parietal lobe | Temporal lobe |
| Normal (mean ± SD) | 0.0621 ± 0.0240 | 0.4355 ± 0.0536 | 0.3447 ± 0.1327 | 0.1608 ± 0.0332 | 0.4535 ± 0.0802 | 0.2963 ± 0.0499 |
| Demented s. (mean ± SD) | 0.1198 ± 0.0603 | 0.4384 ± 0.1083 | 0.4136 ± 0.2108 | 0.1747 ± 0.0667 | 0.4969 ± 0.1826 | 0.3621 ± 0.0849 |

(continued)

| Right hemisphere | Cingulate lobe | Frontal lobe | Insula | Occipital lobe | Parietal lobe | Temporal lobe |
|---|---|---|---|---|---|---|
| Normal (mean ± SD) | 0.1454 ± 0.0394 | 0.3957 ± 0.0577 | 0.1517 ± 0.0675 | 0.1341 ± 0.0322 | 0.3827 ± 0.0691 | 0.2149 ± 0.0442 |
| Demented (mean ± SD) | 0.2099 ± 0.1113 | 0.4313 ± 0.0963 | 0.2043 ± 0.1272 | 0.4125 ± 0.0505 | 0.4275 ± 0.1399 | 0.2667 ± 0.0687 |

As shown in the data of Table 1, the atrophy degrees of various brain regions in the demented elderlies are all greater than those in the normal elderlies. The most important characteristic of the brain in the demented elderly is that the brain atrophy degree is larger than that of their peers. In this regard, the proposed quantification approach of brain regional atrophy in this disclosure can effectively indicate the brain atrophy degree.

The above is only an example of the preferred embodiments of this disclosure, and it is not intended to limit the scope of the present disclosure. Within the spirit and principle of the present disclosure, any modifications, equivalent replacements or improvements etc. based on the disclosure should all be protected by the scope of the patent for the present disclosure.

Claims

1. A method for automatic quantification of regional brain atrophy, **characterized in that** the method at least comprises the following steps of:

Step S01. building a brain template database using a pool of T1w brain MR images with apparent brain structural differences, performing brain lobe partitioning on the MR image to obtain 12 brain lobar partition, and performing brain tissue segmentation on the T1w brain MR images to obtain brain tissue probability maps of white matter, gray matter and cerebrospinal fluid, and performing manual correction on the brain lobar partitions of the brain template database obtained by automatic partitioning;

Step S02. mapping the template images from Step S01 to the T1w MR image of the subject to be segmented with non-linear registration to obtain the spatial transformations between the template and the subject to be segmented, and mapping the brain lobar partitions and the brain tissue probability maps of the template images to the space of the subject image to be segmented by using the spatial transformations;

Step S03. performing label fusion to obtain the brain lobar partitions of the subject to be segmented, and using Bayesian network-based segmentation method to obtain a brain tissue segmentation map based on the prior knowledge of the brain tissue probability map; and

Step S04. calculating the degree of brain atrophy of the subject to be segmented according to its brain lobar partition and brain tissue segmentation map obtained from Step S03.

2. The method of claim 1, wherein a formula for calculating the degree of brain atrophy of the subject to be segmented is as follows:

$$\mathrm{A}_i = \mathrm{V}_{CSF\_i} / (\mathrm{V}_{WM\_i} + \mathrm{V}_{GM\_i})$$

wherein $A_i$ denotes the value of atrophy degree for the $i$-th brain lobe, $V_{CSF\_i}$ denotes the volume of cerebral spinal fluid in the $i$-th brain lobe, $V_{WM\_i}$ denotes the volume of white matter in the $i$-th brain lobe, and $V_{GM\_i}$ denotes the volume of gray matter in the $i$-th brain lobe.

3. The method of claim 1, wherein via the brain lobe partitioning the brain is partitioned into left frontal lobe, right frontal lobe, left occipital lobe, right occipital lobe, left parietal lobe, right parietal lobe, left temporal lobe, right temporal lobe, left cingulate lobe, right cingulate lobe, left insula lobe, and right insula lobe.

4. The method of claim 1, wherein: Step S03 further comprises: using Bayesian network-based segmentation method to perform brain tissue segmentation to obtain white matter, gray matter and cerebral spinal fluid segmentation maps.

5. The method of claim 1, wherein the spatial transformation in Step S02 is obtained by using repeated iterative optimization method to obtain the optimal spatial transformation between the template image and the subject to be segmented.

6. The method of claim 1, wherein in Step S01 the template database is made based on individuals aged between 50 and 90 years old.

7. The method of claim 1, wherein, the number of brain template images in the template database is not less than 5.

8. The method of claim 1, wherein in the template database, the proportion of the number of images for healthy individuals to the number of images for individuals with brain atrophy is 1: 4~4: 1.

9. The method of claim 8, wherein in the template database, the proportion of the number of images for healthy individuals to the number of images for individuals with brain atrophy is 1:1.

FIG. 1

FIG. 2

<table>
<tr><td colspan="2" align="center"><b>INTERNATIONAL SEARCH REPORT</b></td><td>International application No.<br>PCT/CN2018/071937</td></tr>
</table>

**A. CLASSIFICATION OF SUBJECT MATTER**

G06T 7/143 (2017.01) i; G06T 7/11 (2017.01) i

According to International Patent Classification (IPC) or to both national classification and IPC

**B. FIELDS SEARCHED**

Minimum documentation searched (classification system followed by classification symbols)
G06T; A61B

Documentation searched other than minimum documentation to the extent that such documents are included in the fields searched

Electronic data base consulted during the international search (name of data base and, where practicable, search terms used)

CNPAT, CNKI, WPI, EPODOC: 脑, 萎缩, 模板, 分割, 组织, 灰质, 白质, 脊液, 脑叶, 分区, 区域, 分, 概率, 图, 谱, encephalatrophy, encephalanalosis, brain+, cerebr+, +atrophy, template?, segment+, tissue?, alba, ectocinerea, lobe?, lobar, region+, divid+, probability

**C. DOCUMENTS CONSIDERED TO BE RELEVANT**

| Category* | Citation of document, with indication, where appropriate, of the relevant passages | Relevant to claim No. |
|---|---|---|
| PX | CN 107103612 A (SHENZHEN BRAINNOW MEDICAL TECHNOLOGY LTD.), 29 August 2017 (29.08.2017), claims 1-9, description, paragraphs [0019]-[0056], and figures 1-2 | 1-9 |
| A | CN 105816192 A (WANG, Xueyuan et al.), 03 August 2016 (03.08.2016), description, paragraphs [0039]-[0068], and figures 1-5b | 1-9 |
| A | CN 101739681 A (NORTHWESTERN POLYTECHNICAL UNIVERSITY), 16 June 2010 (16.06.2010), entire document | 1-9 |
| A | CN 105844617 A (UNIVERSITY OF ELECTRONIC SCIENCE AND TECHNOLOGY OF CHINA), 10 August 2016 (10.08.2016), entire document | 1-9 |
| A | CN 105212936 A (XUANWU HOSPITAL CAPITAL MEDICAL UNIVERSITY), 06 January 2016 (06.01.2016), entire document | 1-9 |
| A | WO 2016047683 A1 (DAINIPPON PRINTING CO., LTD.), 31 March 2016 (31.03.2016), entire document | 1-9 |
| A | US 2009221901 A1 (YAMAMOTO, S. et al.), 03 September 2009 (03.09.2009), entire document | 1-9 |

☒ Further documents are listed in the continuation of Box C.     ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 29 March 2018 | 08 April 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HE, Chen<br><br>Telephone No. (86-10) 53962403 |

Form PCT/ISA/210 (second sheet) (July 2009)

<table>
<tr><td colspan="3" align="center"><strong>INTERNATIONAL SEARCH REPORT</strong></td><td>International application No.<br>PCT/CN2018/071937</td></tr>
</table>

C (Continuation).     DOCUMENTS CONSIDERED TO BE RELEVANT

| Category* | Citation of document, with indication, where appropriate, of the relevant passages | Relevant to claim No. |
|---|---|---|
| A | LEUNG, K.K. et al., "Brain MAPS: An Automated, Accurate and Robust Brain Extraction Technique Using a Template Library", Neuroimage, 55(3), 01 April 2011 (01.04.2011), pages 1091-1108 | 1-9 |

Form PCT/ISA/210 (continuation of second sheet) (July 2009)

## INTERNATIONAL SEARCH REPORT
Information on patent family members

| International application No. |
| --- |
| PCT/CN2018/071937 |

| Patent Documents referred in the Report | Publication Date | Patent Family | Publication Date |
| --- | --- | --- | --- |
| CN 107103612 A | 29 August 2017 | None | |
| CN 105816192 A | 03 August 2016 | None | |
| CN 101739681 A | 16 June 2010 | CN 101739681 B | 14 September 2011 |
| CN 105844617 A | 10 August 2016 | None | |
| CN 105212936 A | 06 January 2016 | US 2017069086 A1 | 09 March 2017 |
| WO 2016047683 A1 | 31 March 2016 | CN 106659424 A | 10 May 2017 |
| | | US 2017273650 A1 | 28 September 2017 |
| | | JP 2016064004 A | 28 April 2016 |
| | | EP 3199102 A1 | 02 August 2017 |
| US 2009221901 A1 | 03 September 2009 | US 8112144 B2 | 07 February 2012 |
| | | JP WO2007114238 A1 | 13 August 2009 |
| | | JP 5186620 B2 | 17 April 2013 |
| | | WO 2007114238 A1 | 11 October 2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Terminologia Anatomica,* 1998

- **WARFIELD, S. K. ; K.H.ZOU et al.** Simultaneous truth and performance level estimation (STAPLE): an algorithm for the validation of image segmentation. *IEEE Trans Med Imaging,* 2004, vol. 23 (7), 903-921